# EUROPEAN PATENT APPLICATION

(11) **EP 3 059 066 A1**
(43) Date of publication of application: **24.08.2016**
(21) Application number: 16155911.7
(22) Date of filing: 16.02.2016
(51) Int. Cl.: B29C 47/00, B65D 85/804

(54) **POLYMERIC FILM FOR MANUFACTURING COVERS FOR SINGLE-DOSE CAPSULES FOR COFFEE MACHINES, AND METHOD FOR PRODUCING IT**

(30) Priority: 18.02.2015 IT PD20150043
(71) Applicant: M.G. Lavorazione Materie Plastiche S.p.A., 36050 Quinto Vicentino, Frazione Lanzè (IT)
(72) Inventor: MAGRIN, Filippo, 36050 QUINTO VICENTINO VI (IT); DETASSIS, Michele, 38100 TRENTO, FRAZIONE VILLAZZANO (IT)
(74) Representative: Modiano, Micaela Nadia

(57) **Abstract**

A method for providing a polymeric film for manufacturing covers for single-dose capsules for coffee machines, comprising the following steps:
- mixing a deformable polymeric matrix with a filler of non-deformable embrittlement particles;
- extruding by film forming the resulting mixture, so as to provide a film;
- orienting the polymeric chains of the polymeric matrix and the non-deformable particles of the filler along one or more main directions.

## Description

The present invention relates to a method for providing a polymeric film for manufacturing covers for single-dose capsules for coffee machines.

The invention also relates to a polymeric film provided with such method.

The invention also relates to a single-dose capsule for coffee machines.

Currently, a typical package of coffee in a single-dose capsule comprises a cup, for the substance to be subjected to infusion, and a tear-off cover sealed on the cup.

The term "substance" is to be understood as indicating not only coffee, which has a prevalent diffusion, but also other substances and preparations for providing other beverages, such as for example tea, chocolate, herbal teas and the like.

The cover is typically bonded to the cup by adhesive.

To prepare a coffee by means of a coffee machine operating with a corresponding single-dose capsule, the capsule is inserted into a machine in which, substantially, water under pressure (5-20 bars) and at high temperature (85 - 95 °C) is pushed into the cup, where it comes into contact for a certain time interval with the powder of coffee or of another substance; subsequently the mixture of coffee that has formed passes through the cover, which is conveniently torn, and is collected and conveyed toward a dispensing spout.

There are several ways for providing a capsule as described above, one of which is for example disclosed in EP0512470B1 by Société Des Produits Nestle S.A..

In particular, the principle underlying the system known as "Nespresso", developed by Nestle, resides in that the cover tears against a dedicated static contoured punch that is present on the closure body of the infusion receptacle which, in coffee machines using single-dose capsules accommodates the single-dose capsule.

The cover is torn due to the pressure that a coffee machine creates inside the capsule of which the cover is part; such internal pressure deforms the cover until it ruptures.

A static punch defines, with a cup-shaped body in which the capsule is inserted, an infusion chamber; such static punch has a series of spikes adapted to determine a plurality of tears distributed on the cover.

Such contoured punch determines in the cover, when the cover rests on it, a deformation that is greater than the deformation at failure of the material of which the cover is made.

A tear-off cover that meets this requirement is constituted by a thin die-cut sheet of aluminum with a thickness of approximately 30 microns.

The cup of the capsule can be made of different materials, such as for example, plastics, metal and the like, and usually is made of aluminum, by drawing and cropping.

Such a single-dose capsule, despite its numerous positive aspects, is not devoid of drawbacks.

An important drawback of single-dose capsules of the known type is that they cannot be easily recycled, let alone composted. The great success of single-dose capsule coffee machines causes a very large amount of waste, the management of which is onerous and makes this type of packaging environmentally unsustainable.

In recent years, some methods for obviating this problem have been proposed; one of them in particular is disclosed in US20110283891.

This patent application describes a method for providing a compostable capsule, which comprises a complex plurality of components that provide a cover that can open when a certain pressure is exceeded inside the capsule.

The drawback of this technical solution is that sometimes the cover, when it opens, is propelled toward the contoured punch of the machine and gets stuck on it, preventing the extraction of the spent capsule from the coffee machine.

The aim of the present invention is to devise a method for providing a polymeric film for manufacturing covers for single-dose capsules for coffee machines, such polymeric film allowing to provide covers for single-dose capsules that are capable of obviating the limitations shown by covers for single-dose capsules of the known type.

Within this aim, an object of the invention is to devise indeed a polymeric film for the production of covers for single-dose capsules for coffee machines that is easily tearable by the infusion assemblies of coffee machines of the known type and at the same time is highly environment-friendly.

Another object of the invention is to devise a polymeric film that can be provided also by using machineries and equipment of a known type.

This aim and these and other objects that will become better apparent hereinafter are achieved by a method for providing a polymeric film for manufacturing covers for single-dose capsules for coffee machines, characterized in that it comprises the following steps:
- mixing a deformable polymeric matrix with a filler of non-deformable embrittlement particles;
- extruding by film forming the resulting mixture, so as to provide a film;
- orienting the polymeric chains of the polymeric matrix and such non-deformable particles of the filler along one or more main directions.

Further characteristics and advantages of the invention will become better apparent from the following description of a preferred but not exclusive embodiment of the method according to the invention.

Further characteristics and advantages of the invention will become better apparent from the description of a preferred but not exclusive embodiment of a single-dose capsule according to the invention, illustrated by way of non-limiting example in the accompanying drawings, wherein:
Figure 1 is a schematic sectional view of a capsule according to the invention;
Figure 2 is a schematic top view of the capsule according to the invention during use;
Figure 3 is a view of an exemplifying detail of Figure 2.

A method according to the invention for providing a polymeric film for manufacturing covers for single-dose capsules for coffee machines is characterized in that it comprises the following operations:
- mixing a deformable polymeric matrix with a filler of non-deformable embrittlement particles;
- extruding by film forming the resulting mixture, so as to provide a film;
- orienting the polymeric chains of the polymeric matrix and such non-deformable particles of the filler along one or more main directions.

The polymeric matrix is present in a percentage between 5% and 95% by weight, such filler of non-deformable particles being present in a complementary percentage to provide 100% of the mixture.

In particular, the polymeric matrix is present in a percentage between 40% and 80% by weight, the filler of non-deformable particles being present in a complementary percentage to provide 100% of the mixture.

Preferably, the polymeric matrix is present in the percentage of 40% by weight, the filler of non-deformable particles being present in a complementary percentage to provide 100% of the mixture.

The step of orienting the polymeric chains of the polymeric matrix and the non-deformable particles of the filler is provided by means of a process for single-axis stretching of the film that exits from such extrusion operation, with an MDO machine and a stretch ratio comprised between 1:1 and 1:10.

Such operation of orienting the polymeric chains of the polymeric matrix and the non-deformable particles of the filler is provided by means of a process for single-axis stretching with an MDO machine and a stretch ratio comprised between 1:1 and 1:6.

Preferably, the stretch ratio is 1:3.

The orientation step is provided either simultaneously (online) with the step of manufacturing of the film or subsequently (offline).

The MDO (Machine Direction Orientation) process entails that the film passes through a series of heated cylinders, is brought to a convenient temperature and then is stretched in the forward travel direction; the film is then cooled and relaxed on a second series of rollers.

As an alternative, the step of orienting the polymeric film is provided with machines of the TDO (Transverse Direction Orientation) type, or by combinations of machines of the MDO and TDO type (of the Tenter Frame type, double or triple bubble type or also others) or intermeshing stretching processes.

It should be noted that a plastic film not added with mineral fillers, even if oriented, in any case does not tear easily, and if it does, it does so in a suddenly manner, creating the phenomenon known as splitting, with very long openings in the direction of orientation.

Moreover, a non-oriented plastic film must receive a large addition of mineral fillers in order to reach the fragility required for tearing; at these levels of mineral filler, however, the film is difficult to process on extrusion systems.

The polymeric matrix is constituted by one or more biodegradable thermoplastic polymers.

In particular, for example, the biodegradable polymer is constituted by polylactic acid PLA.

As an alternative, such polymeric matrix is constituted by one or more non-biodegradable thermoplastic polymers.

For example, a said non-biodegradable thermoplastic polymer is constituted by polyethylene or polypropylene or other similar polymer.

In a further alternative, the polymeric matrix comprises polylactic acid and other polyesters.

In another alternative, the polymeric matrix comprises polylactic acid in its L and D enantiomeric forms.

The polymeric matrix can also be constituted by one or more thermoplastic polymers such as PHA, PTT, PBS, PBSA, starch-based polymers of the MATER-BI type, polymers derived from polyesters of the ECOFLEX type and the like.

The filler of non-deformable particles is constituted by a mineral filler.

Such mineral filler comprises at least one among calcium carbonate, talc, titanium dioxide, and other similar mineral fillers.

As an alternative, the filler of non-deformable particles is constituted by an organic filler having a function that is equivalent to the mineral filler.

Such organic filler can be constituted for example by thermoplastic or thermosetting polymers that do not melt and do not soften at the processing temperature and act as a non-deformable phase during the orientation step.

Such organic filler can comprise, for example, one of the crystalline phases of the same polymer by which such polymeric matrix is constituted.

The invention also relates to a polymeric film for manufacturing covers for single-dose capsules for coffee machines.

Such polymeric film is provided according to a method as described above, comprises a deformable polymeric matrix, with a filler of non-deformable embrittlement particles, the polymeric chains of the polymeric matrix and the non-deformable particles of the filler being oriented in one or more main directions, the polymeric matrix being present in a percentage between 5% and 95% by weight, and preferably 40%; the filler of non-deformable particles being present in a complementary percentage so as to provide 100% of the material of which the polymeric film is made.

Such polymeric film, in particular, has the orientation of the polymeric chains of the polymeric matrix and of the non-deformable particles of the filler that is monoaxial and with a stretch ratio comprised between 1:1 and 1:6 and preferably equal to 1:3.

The film thus produced typically has a final thickness between 10 and 1000 microns, more specifically between 20 and 100 microns, and in particular of 50 microns.

The polymeric film produced in the manner described above can be opened in a controlled and facilitated manner.

In particular when it is used for manufacturing covers for single-dose capsules for coffee machines, such covers open at the suitable conditions for extracting the coffee, in common coffee machines, allowing the passage of the mixture through a series of micro-openings having a characteristic size of one millimeter (typically between 0.5 and 5 mm), as well as having a high-density distribution (typically 1-10 on an area of 1 cm²).

In a constructive variation thereof, the film according to the invention comprises a layer acting as a barrier against oxygen and flavors.

The presence of a barrier layer allows, if the cup of the capsule also is made of a material that also has barrier properties against oxygen and flavors, to obtain a capsule capable of ensuring for the coffee a greater and more durable protection, with the consequent advantage of being able to simplify, reduce or eliminate the secondary packaging of the product, usually a bag for containing the capsule.

Materials capable of creating a barrier against oxygen and flavors are, for example, highly amorphous vinyl-alcohol copolymers (PVOH).

In order to manufacture such barrier layer on the film according to the invention, coextrusion and deposition methods and means of a per se known type can be used.

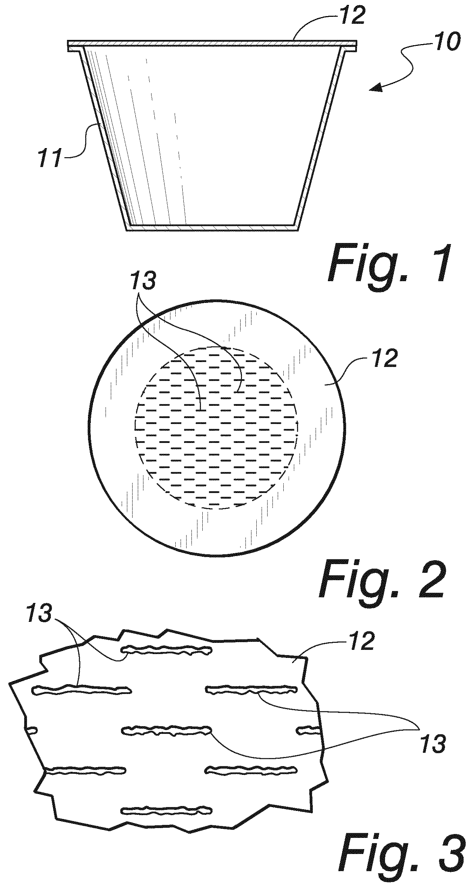

The invention also relates to a single-dose capsule for coffee machines, designated by the numeral 10 in figure 1.

The single-use capsule 10 is constituted by a cup 11 sealed by a tear-off cover 12.

The particularity of the single-use or single-dose capsule 10 resides in that the tear-off cover 12 is constituted by a contoured portion of a polymeric film as described above.

In particular, the cup 11 also is made of biodegradable and preferably compostable material.

In this manner the single-dose capsule 10 is completely biodegradable and preferably compostable.

Figure 2 shows on the cover 12 a series of micro-openings 13 that have a characteristic size on the order of millimeters, for example and typically between 0.5 and 5 mm, and have a high-density distribution, for example between 1 and 10 micro-openings on an area of 1 cm².

Figure 3 highlights the characteristic shape with a predominantly longitudinal extension of the micro-openings 13, substantially with the shape of an elongated ellipse.

In practice it has been found that the invention achieves the intended aim and objects.

In fact, with the method according to the invention a polymeric film for manufacturing covers for single-dose capsules for coffee machines is provided which can be torn easily by infusion assemblies of coffee machines of the known type and at the same time is highly environment-friendly, since it can be made of biodegradable polymers with added mineral fillers also without disposal problems.

In particular, the invention has provided a biodegradable and compostable polymeric film for covers of coffee capsules which, if combined with a cup also made of biodegradable and compostable material, allows the entire capsule to be biodegradable and compostable.

In this manner the end user can place the used single-dose capsule containing the exhausted coffee powder directly in the compost recovery container.

The method according to the invention provides a film according to the invention and a single-dose capsule according to the invention that are to be understood as usable both for infusion systems of the known type, such as "Nespresso", and for infusion systems of the type known as "A Modo Mio" of the Luigi Lavazza SpA company, as well as for other similar and equivalent infusion systems.

The invention thus conceived is susceptible of numerous modifications and variations, all of which are within the scope of the appended claims; all the details may further be replaced with other technically equivalent elements.

In practice, the components and materials used, so long as they are compatible with the specific use, as well as the contingent shapes and dimensions, may be any according to requirements and to the state of the art.

The disclosures in Italian Patent Application no. PD2015A000043 (102015902331407), from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for providing a polymeric film for manufacturing covers for single-dose capsules for coffee machines, **characterized in that** it comprises the following steps:
- mixing a deformable polymeric matrix with a filler of non-deformable embrittlement particles;
- extruding by film forming the resulting mixture, so as to provide a film;
- orienting the polymeric chains of the polymeric matrix and said non-deformable particles of the filler along one or more main directions.

2. The method according to claim 1, **characterized in that**
- said polymeric matrix is present in a percentage between 5% and 95% by weight and preferably is present in a percentage between 40% and 80% by weight,
- said filler of non-deformable particles being present in a complementary percentage to provide 100% of the mixture.

3. The method according to one or more of the preceding claims, **characterized in that** said operation of orienting the polymeric chains of the polymeric matrix and said non-deformable particles of the filler is provided by means of a process for single-axis stretching of the film that exits from said extrusion operation, with an MDO machine and a stretch ratio comprised between 1:1 and 1:10 and preferably comprised between 1:1 and 1:6.

4. The method according to one or more of the preceding claims, **characterized in that** said polymeric matrix is constituted by one or more biodegradable thermoplastic polymers.

5. The method according to claim 4, **characterized in that** said biodegradable polymer is constituted by polylactic acid PLA.

6. The method according to one or more of claims 1 to 3, **characterized in that** said polymeric matrix is constituted by one or more non-biodegradable thermoplastic polymers.

7. The method according to claim 6, **characterized in that** said non-biodegradable thermoplastic polymer is constituted by polyethylene or polypropylene or other similar polymer.

8. The method according to one or more of claims 1 to 3, **characterized in that** said polymeric matrix comprises polylactic acid and other polyesters.

9. The method according to one or more of claims 1 to 3, **characterized in that** said polymeric matrix comprises polylactic acid in its L and D enantiomeric forms.

10. The method according to one or more of claims 1 to 3, **characterized in that** said polymeric matrix is constituted by one or more thermoplastic polymers such as PHA, PTT, PBS, PBSA, starch-based polymers of the MATER-BI type, polymers derived from polyesters of the ECOFLEX type and the like.

11. The method according to one or more of claims 1 to 3, **characterized in that** said filler of non-deformable particles is constituted by a mineral filler, said mineral filler comprising at least one among calcium carbonate, talc, titanium dioxide, and other similar mineral fillers.

12. The method according to one or more of claims 1 to 3, **characterized in that** said filler of non-deformable particles is constituted by an organic filler, said organic filler comprising thermoplastic or thermosetting polymers that do not melt and do not soften at the processing temperature and act as non-deformable phase during the orientation operation.

13. A polymeric film for manufacturing covers for single-dose capsules for coffee machines, provided according to a method according to claims 1 to 12, **characterized in that** it comprises a deformable polymeric matrix, with a filler of non-deformable embrittlement particles, the polymeric chains of said polymeric matrix and said non-deformable particles of the filler being oriented in one or more main directions, said polymeric matrix being present in a percentage between 5% and 95% by weight, said filler of non-deformable particles being present in a complementary percentage so as to provide 100% of the material of which said polymeric film is made.

14. The polymeric film according to claim 13, **characterized in that** said orientation of said polymeric chains of said polymeric matrix and of said non-deformable particles of the filler is monoaxial and with a stretch ratio comprised between 1:1 and 1:6.

15. The film according to claims 13 and 14, **characterized in that** it comprises a layer acting as a barrier against oxygen and flavors.

16. A single-use capsule for coffee machines, of the type constituted by a cup sealed by a tear-off cover, **characterized in that** said tear-off cover is constituted by a shaped portion of a polymeric film according to one or more of claims 13 to 15.
